(19) Europäisches Patentamt
European Patent Office
Office européen des brevets

(11) EP 3 204 788 B1

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **15775208.0**

(22) Anmeldetag: **06.10.2015**

(51) Internationale Patentklassifikation (IPC):
***G01S 13/44*** (2006.01) ***G01S 13/536*** (2006.01)
***H01Q 25/02*** (2006.01) ***H01Q 1/32*** (2006.01)
***H01Q 3/24*** (2006.01) ***H01Q 3/26*** (2006.01)
***H01Q 13/20*** (2006.01) ***H01Q 21/06*** (2006.01)
***G01S 7/41*** (2006.01) ***G01S 13/34*** (2006.01)
***G01S 13/42*** (2006.01) ***G01S 13/931*** (2020.01)

(52) Gemeinsame Patentklassifikation (CPC):
**G01S 13/931; G01S 7/41; G01S 13/345; G01S 13/424; G01S 13/4445; G01S 13/4454; G01S 13/536; H01Q 1/32; H01Q 3/24; H01Q 3/26; H01Q 13/206; H01Q 21/065; H01Q 25/02;**
G01S 13/935

(86) Internationale Anmeldenummer:
**PCT/EP2015/073018**

(87) Internationale Veröffentlichungsnummer:
**WO 2016/055455 (14.04.2016 Gazette 2016/15)**

(54) **ABBILDENDER RADARSENSOR MIT HORIZONTALER DIGITALER STRAHLFORMUNG UND VERTIKALER OBJEKTVERMESSUNG DURCH PHASENVERGLEICH BEI ZUEINANDER VERSETZTEN SENDERN**

IMAGING RADAR SENSOR WITH HORIZONTAL DIGITAL BEAM FORMING AND VERTICAL OBJECT MEASUREMENT BY PHASE COMPARISON, WHILE HAVING MUTUALLY OFFSET TRANSMITTERS

CAPTEUR RADAR FORMEUR D'IMAGE AVEC FORMATION NUMÉRIQUE HORIZONTALE DE FAISCEAU ET MESURE VERTICALE D'OBJET PAR COMPARAISON DE PHASES EN CAS D'ÉMETTEURS DÉCALÉS LES UNS PAR RAPPORT AUX AUTRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2014 DE 102014014864**

(43) Veröffentlichungstag der Anmeldung:
**16.08.2017 Patentblatt 2017/33**

(73) Patentinhaber: **Astyx GmbH**
**85521 Ottobrunn (DE)**

(72) Erfinder: **TRUMMER, Günther**
**85521 Ottobrunn (DE)**

(74) Vertreter: **Berkenbrink, Kai-Oliver**
**Patentanwälte Becker & Müller**
**Turmstrasse 22**
**40878 Ratingen (DE)**

(56) Entgegenhaltungen:
**WO-A1-2010/066458** **WO-A1-2013/034282**
**WO-A1-2014/004505** **DE-A1-102004 059 915**
**DE-A1-102009 046 499** **DE-A1-102010 064 348**
**DE-A1-102011 113 018** **DE-A1-102013 102 424**
**US-A1- 2011 163 906** **US-B1- 6 246 365**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 204 788 B1

## Beschreibung

### Technisches Anwendungsgebiet

Die Erfindung betrifft ein Verfahren zur Vermessung der vertikalen Position von Objekten, mit einem Radarsensor, welcher zwei verschachtelte horizontale Scans durchführt.

Millimeterwellen-Radarsensoren, z.B. für automobile und aeronautische Anwendungen sollen eine kompakte und kostengünstige Bauweise vorweisen. Beschränkt sich die Detektion auf nur eine Ebene (meist die horizontale Ebene), was bei den meisten automobilen Radarsensoren der Fall ist, so kann dies in kostengünstiger Weise durch den Einsatz planarer Antennen und mehreren Empfängern erfolgen. Die Strahlformung und Steuerung erfolgt dabei nach dem Prinzip des "Digital Beamforming".

Mit steigendem Anspruch an die Zuverlässigkeit, sollen insbesondere Radarsensoren im Automobilbereich in der Lage sein, nicht relevante Hindernisse wie Brücken und Schilderbrücken von liegengebliebenen Objekten auf der Straße zu unterscheiden, welche eine Gefahr für den Straßenverkehr darstellen.

Im aeronautischen Bereich wird diese Sensorik in letzter Zeit auch für die Nahbereichsüberwachung von Helikoptern eingesetzt. Hier ist eine dreidimensionale Vermessung der Hindernisse insbesondere in der Start- und Landephase erforderlich. Eine rein zweidimensionale Vermessung reicht nicht aus.

### Stand der Technik

Aus der Dissertation von Dr. Winfried Mayer mit dem Titel "Abbildender Radarsensor mit sendeseitig geschalteter Gruppenantenne", Cuvillier Verlag, Göttingen 2008, ISBN 978-3-86727-565-1 ist ein Verfahren sowie eine Vorrichtung bekannt, welches mit der Technik der digitalen Strahlformung, bei denen ein Antennenarray mit mehreren Sendern und mehreren Empfängern eingesetzt wird, ein Gebiet überwacht.

In der DE 10 2008 052 246 A1 wird ein Sensorsystem mit verstellbarer Elevationsstrahlrichtung zur vertikalen Lagebestimmung von Objekten beschrieben. Die Verstellung erfolgt hierbei durch die mechanische Bewegung eines Reflektors.

In der WO2013/034282 A1 wird ein abbildender Radarsensor mit synthetischer Vergrößerung der Antennenapertur und zweidimensionaler Strahlschwenkung beschrieben. Die zweidimensionale Strahlschwenkung erfolgt dabei in der horizontalen durch digitale Strahlformung aus mehreren Empfangskanälen, in der vertikalen durch den Vergleich der Amplituden zweier Empfangssignale, welche von zwei Sendern erzeugt werden, welche ein zueinander in der vertikalen verkipptes Antennendiagramm aufweisen. Dieses Verfahren weist in der Praxis jedoch den Nachteil auf, dass durch dem Sensor vorgelagerte Strukturen, wie Radome, Plastik-Stoßfänger und ähnliche Abdeckungen die Amplitudencharakteristik der Antennendiagramme verzerrt wird. Dies bedeutet, dass je nach Abdeckung eine Kalibrierung des Radarsensors durchzuführen ist, um diese Verzerrungen messtechnisch zu erfassen und zu kompensieren.

US 6,246,365 B1 offenbart ein Radargerät, umfassend: Eine Empfangsantenne mit einer Array-Antenne, in der eine Vielzahl von Antennenelementen in einer horizontalen Richtung angeordnet sind; und einen Signalverarbeitungsabschnitt zum Erkennen eines in einem vorbestimmten Peilbereich vorhandenen Ziels aus von der Empfangsantenne empfangenen Signalen durch eine horizontale Abtastung eines Antennendiagramms der Empfangsantenne, wobei mindestens eines der Antennenelemente in einer vertikalen Richtung verschoben ist, und wobei der Signalverarbeitungsabschnitt eine Peilung des Ziels unter Verwendung eines Signals erkennt, das von dem mindestens einen in der vertikalen Richtung verschobenen

Antennenelement empfangen wird.

WO 2010/066458 A1 offenbart eine Vorrichtung zur Bestimmung einer Position eines Objekts, insbesondere eines sich bewegenden Objekts, mit mindestens zwei Sendeantennen, einer Anzahl mehrerer in Reihe angeordneter Empfangsantennen, wobei die Sendeantennen in Richtung zum Objekt jeweils hinter Empfangsantennen angeordnet sind, welche an den oder in der Nähe der gegenüberliegenden Reihenenden vorgesehen sind, einem Frequenzgenerator zur Erzeugung von Signalen, welche von den Sendeantennen zeitlich aufeinanderfolgend abgegeben werden, mit mindestens einer Verarbeitungseinheit zur Durchführung mindestens einer Verknüpfung der von den Empfangsantennen abgegebenen Empfangssignale nach der Methode der digitalen Strahlformung zur Erzeugung eines gebündelten Antennenstrahls und zur Durchführung einer Geschwindigkeitskorrektur und/oder einer Entfernungskorrektur mittels einer zweidimensionalen FFT durch Vergleich von Ausgangssignalen der, dem gebündelten Antennenstrahl entsprechenden, sich überlagernden Antennenzeilen, und mit einer Wiedergabeeinrichtung zur Darstellung der Position des Objekts.

WO 2013/034282 A1 offenbart eine Vorrichtung zur Bestimmung einer Position eines Objekts, insbesondere eines sich bewegenden Objekts, mit mindestens zwei schaltbaren Sendeantennengruppen, wobei jede Sendeantennengruppe (36) mehrere Sendeantennen aufweist, die sich hinsichtlich ihrer Hauptstrahlrichtungen voneinander unterscheiden, einer Empfangsantennenanordnung mit einer Vielzahl von Empfangsantennen, die in einer laufenden Reihe nebeneinander beginnend von einer ersten bis zu einer letzten angeordnet sind, wobei die Sendeantennengruppen so angeordnet sind, dass der Abstand zwischen zwei Sendeantennen gleicher Hauptstrahlrichtung gleich dem Abstand der ersten Empfangsantennen von der letzten Empfangsantenne oder gleich der Summe des Abstands der ersten Empfangsantennen von der letzten Empfangsantenne und des Abstands von zwei benachbarten Empfangsantennen ist, wobei die Abstände sich jeweils auf die Schwerpunkte der Sendeantennen und Empfangsantennen und sich jeweils auf eine von der letzten zur ersten laufende Richtung beziehen.

US 2011/163906 A1 offenbart ein Radargerät mit einer Antenneneinheit mit einer Mehrzahl von Sendeantennen und einer Mehrzahl von Empfangsantennen; und eine Sende-/Empfangseinheit, die ein Sendesignal über eine Sendeantenne, die unter der Vielzahl von Sendeantennen geschaltet ist, sendet oder das Sendesignal über einen Mehrfach-Sendekanal, der der Vielzahl von Sendeantennen zugeordnet ist, sendet, und ein Empfangssignal, das ein Reflexionssignal ist, das durch Reflexion des gesendeten Sendesignals an einem Ziel erhalten wird, über eine Empfangsantenne, die unter der Vielzahl von Empfangsantennen geschaltet ist, empfängt oder das Empfangssignal über einen Mehrfach-Empfangskanal, der der Vielzahl von Empfangsantennen zugeordnet ist, empfängt.

## Darstellung der Erfindung

Die Aufgabe der Erfindung ist, einen Radarsensor, ein Verfahren sowie ein Radarsystem zur Verfügung zu stellen, womit die oben beschriebenen Nachteile wie mechanische Strahlschwenkung und Kalibrierung vermieden werden. Ferner ist es Aufgabe der Erfindung eine Vorrichtung und ein Verfahren zur Verfügung zu stellen, mit dem eine vertikale Lage eines Objekts bestimmt werden kann.

Die Aufgabe wird vorrichtungsgemäß mit den Merkmalen des Anspruchs 1, verfahrensgemäß mit den Merkmalen des Anspruchs 10 und gemäß dem Radarsystem mit den Merkmalen des Anspruchs 9 gelöst.

Der Sensor besteht mindestens aus zwei Sendeantennen und einem Array von Empfangsantennen im Abstand d. Die Phasenzentren der Sendeantennen sind in der Vertikalen um den Abstand z versetzt, welcher kleiner oder gleich der halben Freiraumwellenlänge (l) des abgestrahlten Signals ist, insbesondere um die Eineindeutigkeit zu gewährleisten und Mehrdeutigkeiten zu vermeiden. Die schaltbaren Sendeantennen weisen somit unterschiedliche vertikale Positionen der Phasenzentren auf, d. h. eine erste Position des Phasenzentrums der ersten schaltbaren Sendeantenne, eine zweite Position der Phasenzentren der zweiten schaltbaren Sendeantenne, usw., wodurch die vertikalen Positionen der Phasenzentren unterschiedlich sind, welche um den Abstand z vertikal versetzt sind. In der horizontalen ist die zweite Antenne um den Zeilenabstand des Empfangsarrays d zur ersten Antenne versetzt. Für den Zeilenabstand des Empfangsarrays d gilt:

$$d := \frac{1 - \frac{1}{N}}{1 + \sin\left(\varphi\max \cdot \frac{\pi}{180}\right)} \cdot \lambda \qquad [1]$$

Mit

N = Anzahl der Antennenzeile
1 = Wellenlänge des abgestrahlten Signals
fmax = maximaler Schwenkwinkel des digital geformten Antennenstrahls.

Abbildung 1 zeigt beispielshaft eine solche Antennenanordnung, realisiert mit planaren Antennenstrukturen.

Die Detektion eines Objektes im dreidimensionalen Raum wird nun wie folgt durchgeführt:
Wie in Abbildung 2 zu sehen, wird abwechselnd der Sender 1 und der Sender 2 betrieben, wobei - im Falle eines sogenannten FMCW-Radars - die Frequenz linear verstimmt wird. Während der Verstimmung wird das Empfangssignal von einem AD-Wandler erfasst, einer ersten schnellen Fouriertransformation (FFT) unterzogen und abgespeichert. Die gespeicherten Daten werden dann nach dem jeweils aktiven Sender sortiert und in einem Spektrogramm angeordnet. Danach wird eine zweite FFT über die Spalten des Spektrogramms gerechtet. Als Resultat erhält man die sogenannte Range-Doppler-Matrix, deren Spalten-Nummer den Entfernungseinheiten (sog. Range-Bins) entsprechen und deren Zeilen-Nummer den Geschwindigkeitseinheiten (sog. Velocity-Bins) des Radarsensors entsprechen. Die Komplexen Matrix-Elemente entsprechen der Amplitude und Phase des Signals.

Im Sinne der digitalen Stahlformung - wie in der WO2013/034282 A1 im Detail beschrieben - wird nun das Array-Diagramm des Empfangsarrays gebildet. Dabei werden die Range-Doppler-Matrizen der einzelnen Empfangskanäle zunächst gewichtet, dann entsprechend der gewünschten Strahlrichtungen ($\gamma$) in der Phase ($\alpha$) verschoben und anschließend summiert. Man erhält dann eine Reihe von Range-Doppler-Matrizen, welche den Empfangssignalen der Hauptstrahlrichtungen des Empfangs-Arrays entsprechen. Nachdem diese vorliegen, wird in den einzelnen Range-Doppler-Matrizen mit Hilfe eines sogenannten CFAR-Algorithmus nach Objekten gesucht, welche sich aus dem Rauschen des Sensors oder vor störendem Hintergrund - sog. Clutter - hervorheben. Ist ein solches Objekt detektiert, wird die gleiche Range-Doppler-Zelle des benachbarten Beams zur exakten horizontalen Winkelbestimmung nach dem sogenannten Monopuls-Prinzip herangezogen. Dabei kann entweder nur das Amplitudenverhältnis der beiden benachbarten Beams betrachtet werden, wie in Abbildung 3 a,b dargestellt, oder das sogenannte Fehlersignal. Dieses wird dadurch erzeugt, dass zunächst das Summensignal gebildet wird, also die beiden Elemente der benachbarten Matrizen vektoriell summiert werden. Alsdann wird das Differenzsignal gebildet und das Differenzsignal durch das Summensignal dividiert. Der Realteil dieser Division zweier komplexer Zahlen wird als sog. Fehlersignal bezeichnet. Das Fehlersignal ist proportional des relativen Winkels zwischen den beiden betrachteten Beams. Auf diese Weise kann die horizontale Position exakt bestimmt werden.

Anstelle der Suche nach dem Beam in dem sich das Objekt befindet und der exakten Bestimmung des horizontalen Winkels nach dem Monopuls-Verfahren könnte man einfach das Prinzip der digitalen Strahlausrichtung nach dem Objekt umkehren und die Phasenverschiebung zwischen zwei benachbarten Antennenzeilen messen. Denn es gilt:

$$\alpha := -2\pi \cdot \frac{d}{\lambda} \cdot \sin(\gamma) \qquad [2]$$

Daraus lässt sich also die horizontale Ausrichtung des Objekts direkt vermessen. In der Praxis ist jedoch das Signal der einzelnen Kanäle zu schwach und von Rauschen überlagert, sodass eine genaue Phasenmessung zwischen den Kanälen nicht möglich ist. Ist aber das Objektsignal ausreichend stark, so kann man daraus ein Meßverfahren ableiten.

Die Innovation besteht nun darin, dieses Meßverfahren auf die vertikale Positionsbestimmung des Objekts anzuwenden.

Es wird zunächst das "Digital Beamforming" mit den Datensätzen der beiden Sendeantennen durchgeführt.

Dann wird das Objekt im Datensatz der ersten Antenne detektiert, bzw. die Beam-Nummer und das Element der Range-Doppler-Matrix.

Alsdann wird der Phasenunterschied (b ) zum gleichen Element der Range-Doppler-Matrix der gleichen Beam-Nr. aus dem Datensatz der zweiten Antenne gemessen. Da die Sendeantennen in der vertikalen um den Abstand z zueinander versetzt sind gilt wie oben:

$$\beta := -2 \cdot \pi \cdot \frac{z}{\lambda} \cdot \sin(\varphi) \qquad [3]$$

Wobei hier der Winkel $\varphi$ die vertikale Winkelposition des Objekts ist. Im Gegensatz zum horizontalen Ansatz funktioniert hier das Verfahren, da der Phasenunterschied aus dem Array-Beam bestimmt wird. Hier ist das Verhältnis von Signal zum Rauschen ausreichend hoch. Die Gleichung [3] gilt jedoch nur dann, wenn das Phasenzentrum der zweiten Antenne in der gleichen horizontalen Position sich befindet, wie die erste Antenne. Dies ist jedoch bei in der Vertikalen ausgedehnten planaren Antennenzeilen nicht möglich. Aus diesem Grund sind die Antennenzeilen in der horizontalen zu versetzten. Erfindungsgemäß wählt man hier den gleichen

Abstand (d) wie den Zeilenabstand im Empfangsarray.

Der nun gemessene Winkel ($\beta$ m) ist die Summe aus der vertikalen Phasendifferenz $\beta$ und der horizontalen Phasendifferenz a. Mit Gleichung [3] ergibt sich dann die vertikale Objektposition $\varphi$ zu:

$$\varphi := \operatorname{asin}\left( \frac{\beta m - \alpha}{2 \cdot \pi \cdot \frac{z}{\lambda}} \right) \qquad [4]$$

Die Genauigkeit der Bestimmung der vertikalen Position hängt also nicht nur vom Signal zu Rausch Verhältnis ab sondern auch von der Genauigkeit, mit der die horizontale Winkelposition $\gamma$ und damit die Phasendifferenz $\alpha$ bestimmt werden kann.

Um Mehrdeutigkeiten bei extremen vertikalen Winkelpositionen zu vermeiden, wird erfindungsgemäß ein vertikaler Abstand der Phasenzentren kleiner gleich $\lambda/2$ gewählt. Bewegt sich nun das Objekt, so überlagert sich der gemessenen Phase eine Phasenverschiebung durch den Doppler-Effekt. Diese Phasenverschiebung zwischen dem Datensatz aus der Messung von Antenne 1 zu Antenne 2 ist vor der Winkelberechnung zu korrigieren.

Die Phasenkorrektur der Range-Doppler-Matrizen aus der zweiten Messung sind also um den Winkel

$$\Delta\phi := 2 \cdot \pi \cdot \mathrm{ldopp} \cdot \delta\mathrm{fd} \cdot \Delta T$$

mit ldopp: Doppler-Filter-Nr.
δfd: Bandbreite des Doppler-Filters
ΔT: Zeitversatz zwischen der Aktivierung des linken und des rechten Senders Die Doppler-Filter-Nr. entspricht dabei der Zeilen-Nummer der Range-Doppler-Matrix. Die Bandbreite berechnet sich aus der Beobachtungsdauer des Objekts, nach der Formel

$$\delta\mathrm{fd} := \frac{\mathrm{fm}}{\mathrm{Nsweep}}$$

Mit 1/fm = Dauer der Frequenzrampe aus Abbildung 2 und
Nsweep = Anzahl der Frequenzrampen.

## Patentansprüche

1. Radarsensor zur Bestimmung einer Position eines Objekts im dreidimensionalen Raum, mit

   - mindestens zwei schaltbaren in Antennenzeilen aufgebauten Sendeantennen, bestehend aus Antennen, wobei die Antennenzeilen der Sendeantennen vertikal und parallel zueinander angeordnet sind, und die mindestens zwei Sendeantennen jeweils Phasenzentren mit unterschiedlicher vertikaler Position zueinander haben,
   - einer Anzahl von mehreren horizontal in Reihe angeordneten Empfangsantennen, wobei die Sendeantennen in der Horizontalen in einem Abstand angeordnet sind, welcher dem horizontalen Abstand zwischen zwei benachbarten Einzelantennen der Empfangsantennen entspricht, und wobei die jeweiligen Phasenzentren der Sendeantennen in der Vertikalen um einen Abstand zueinander versetzt sind, welcher kleiner oder gleich der halben Freiraumwellenlänge des abgestrahlten Signals ist.

2. Radarsensor nach Anspruch 1, der dazu befähigt ist,

   eine Folge von zeitlich aufeinanderfolgend von den Sendeantennen gesendeten und am Objekt reflektierten Empfangssignalen zu empfangen,
   die Empfangssignale zu digitalisieren,
   die digitalisierten Empfangssignale nach der Methode der digitalen Strahlformung zu mehreren gebündelten Antennenstrahlen zu verknüpfen,
   die Phasen der auf das Objekt hin ausgerichteten Antennenstrahlen bei unterschiedlicher vertikaler Position der Phasenzentren des Senders mit gleichem Entfernungs- und Geschwindigkeitswert zu vergleichen, und
   die Position des Objekts darzustellen.

3. Radarsensor nach Anspruch 2, wobei der Radarsensor dazu befähigt ist, zur Erzielung einer höheren horizontalen Winkelauflösung in einem Beobachtungswinkelbereich die Amplituden benachbarter Antennenstrahlen auszuwerten.

4. Radarsensor nach Anspruch 2 oder 3, wobei der Radarsensor dazu befähigt ist, zur Erzielung einer höheren horizontalen Winkelauflösung die Summe und Differenz zweier benachbarter Antennenstrahlen auszuwerten.

5. Radarsensor nach einem der Ansprüche 1 bis 4, wobei die Sendeantennen identisch aufgebaut sind.

6. Radarsensor nach einem der Ansprüche 1 bis 5, wobei die Empfangsantennen Antennenzeilen sind, die parallel zueinander angeordnet sind.

7. Radarsensor nach Anspruch 6, wobei die Antennenzeilen der Sendeantennen und der Empfangsantennen parallel zueinander angeordnet sind.

**8.** Radarsensor nach Anspruch 1, wobei die Position des Objekts mittels einer Wiedergabeeinrichtung über mehrere Antennendiagramme durch Auswertung von Betrag und Phase darstellbar ist.

**9.** Radarsystem zur Verwendung eines Radarsensors zur Bestimmung einer Position eines Objekts im dreidimensionalen Raum nach einem der Ansprüche 1 bis 8.

**10.** Radarmessverfahren zur Bestimmung einer Position eines Objekts, insbesondere eines sich bewegenden Objekts, mit den Verfahrensschritten:

- Empfang einer Folge von zeitlich aufeinanderfolgend, von mindestens zwei schaltbaren in Antennenzeilen aufgebauten Sendeantennen, gesendeten und am Objekt reflektierten Empfangssignalen durch eine Anzahl von mehreren horizontal in einer Reihe angeordneten Empfangsantennen,

  wobei die Antennenzeilen der Sendeantennen vertikal und parallel zueinander angeordnet sind, und die mindestens zwei Sendeantennen jeweils Phasenzentren mit unterschiedlicher vertikaler Position zueinander haben,
  wobei die Sendeantennen in der Horizontalen in einem Abstand angeordnet sind, welcher dem horizontalen Abstand zwischen zwei benachbarten Einzelantennen der Empfangsantennen entspricht, und wobei die jeweiligen Phasenzentren der Sendeantennen in der Vertikalen um einen Abstand zueinander versetzt sind, welcher kleiner oder gleich der halben Freiraumwellenlänge des abgestrahlten Signals ist,

- Digitalisierung der Empfangssignale,
- Verknüpfung der digitalisierten Empfangssignale nach der Methode der digitalen Strahlformung zu mehreren gebündelten Antennenstrahlen,
- Durchführung einer Geschwindigkeitskorrektur mittels einer zweidimensionalen FFT und Vermessung des Zeitversatzes zwischen den beiden unterschiedlichen Aussendungen,
- Phasenvergleich der auf das Objekt hin ausgerichteten Antennenstrahlen bei unterschiedlicher vertikaler Position der Phasenzentren der Senderantennen, mit gleichem Entfernungs- und Geschwindigkeitswert, und
- Darstellung der Position des Objekts.

**11.** Verfahren nach Anspruch 10, wobei zur Erzielung einer höheren horizontalen Winkelauflösung in einem Beobachtungswinkelbereich die Amplituden benachbarter Antennenstrahlen ausgewertet werden.

**12.** Verfahren nach Anspruch 10, wobei zur Erzielung einer höheren horizontalen Winkelauflösung die Summe und Differenz zweier benachbarter Antennenstrahlen ausgewertet werden.

## Claims

**1.** Radar sensor for determining a position of an object in a three-dimensional space, the device comprising:

- at least two switchable transmitting antennas arranged in lines of antennas, consisting of antennas, wherein the antenna lines of the transmitting antennas are arranged vertical and parallel to each other, the at least two transmitting antennas having different vertical positions of their respective phase centers; and
- a plurality of receiving antennas arranged horizontally in series, the transmitting antennas being arranged at a distance in the horizontal that corresponds to a horizontal distance between two adjacent individual antennas of the receiving antennas and wherein the
respective phase centers of the transmitting antennas are offset in the vertical by a distance which is smaller than or equal to half the free space wave length of the emitted signal.

**2.** Radar sensor according to claim 1, wherein the device is a radar sensor configured to

receive a sequence of received signals sent in chronological succession by the transmitting antennas and reflected from the object,
digitizing the received signals,
interlinking the digitized received signals to form a number of bundled antenna beams by a digital beam-forming method,
comparing phases of the antenna beams aligned to the object with different vertical positions of the phase centers of the transmitting antennas with the same distance and velocity value, and
displaying the position of the object.

3. Radar sensor according to claim 2, wherein the radar sensor is configured to evaluate amplitudes of adjacent antenna beams in order to achieve a higher horizontal angular resolution in an angular range of observation.

4. Radar sensor according to claim 2 or 3, wherein the radar sensor is configured to evaluate a sum of and a difference between two adjacent antenna beams in order to achieve a higher horizontal angular resolution.

5. Radar sensor according to one of claims 1 to 4, wherein the transmitting antennas are identical in construction.

6. Radar sensor according to one of claims 1 to 5, wherein the receiving antennas are lines of antennas arranged parallel to one another.

7. Radar sensor according to claim 6, wherein the lines of antennas of the transmitting antennas and the receiving antennas are arranged parallel to one another.

8. Radar sensor according to claim 1, wherein the position of the object can be displayed on a display device based on a number of antenna diagrams by evaluating the sum and difference.

9. Radar system for the use of a radar sensor for determining a position of an object in a three-dimensional space according to one of claims 1-8.

10. Radar measuring method for determining a position of an object, in particular of a moving object, comprising the following method steps:

- receiving a sequence of chronologically consecutive received signals sent by at least two switchable transmitting antennas arranged in lines of antennas, the received signals being reflected from the object by a plurality of receiving antennas, the plurality of receiving antennas being arranged horizontally in series,

  wherein the antenna lines of the transmitting antennas are arranged vertical and parallel to each other and the at least two transmitting antennas having different vertical positions of their respective phase centers, wherein the transmitting antennas in the horizontal being arranged at a distance which corresponds to a horizontal distance between two adjacent individual antennas of the receiving antennas, and wherein the respective phase centers of the transmitting antennas are offset in the vertical by a distance which is smaller than or equal to half the free space wave length of the emitted signal,

- digitizing the received signals,
- interlinking the digitized received signals by digital beam-forming to form a number of bundled antenna beams,
- applying a velocity correction by means of a two-dimensional FFT and measuring a time offset between the two different signals,
- comparing a phase of the antenna beams aligned to the object in different vertical positions of the phase centers of the transmitter with the same distance and velocity value, and
- displaying the position of the object.

11. The method according to claim 10, wherein the amplitudes of adjacent antenna beams are evaluated to achieve a higher horizontal angular resolution within an angular range of observation.

12. The method according to claim 10, wherein a sum of and a difference between two adjacent antenna beams are evaluated to achieve a higher horizontal angular resolution.

**Revendications**

1. Capteur radar permettant de déterminer une position d’un objet dans un espace tridimensionnel, avec

- au moins deux antennes émettrices constituées connectables en lignes d’antennes, composées d’antennes, sachant que les lignes d’antennes des antennes émettrices sont disposées verticales et parallèles les unes par rapport aux autres et au moins les deux antennes émettrices possèdent respectivement des centres de phase avec une position verticale différente l'un par rapport à l'autre,
- un nombre de plusieurs antennes réceptrices disposées horizontalement en série,

sachant que les antennes émettrices sont disposées à l'horizontale à une distance, laquelle correspond à la distance horizontale entre deux antennes individuelles voisines des antennes réceptrices et sachant que les centres de phase respectifs des antennes émettrices sont décalés les unes par rapport aux autres à la verticale d'une distance, laquelle est plus petite ou égale à la moitié de la longueur d'onde en espace libre du signal émis.

**2.** Capteur radar selon la revendication 1, qui est capable de

recevoir une suite de signaux de réception se succédant dans le temps émis par les antennes émettrices et réfléchis sur l'objet,
numériser les signaux de réception,
associer les signaux de réception numérisés selon la méthode de la formation de faisceau numérique à plusieurs faisceaux d'antenne associés,
comparer à une valeur d'éloignement et de vitesse identique les phases des faisceaux d'antenne orientés sur l'objet pour une position verticale différente des centres de phase de l'émetteur, et
représenter la position de l'objet.

**3.** Capteur radar selon la revendication 2, sachant que le capteur radar est capable d'évaluer les amplitudes de faisceaux d'antenne voisins pour obtenir une résolution angulaire horizontale plus élevée dans une plage d'angles d'observation.

**4.** Capteur radar selon la revendication 2 ou 3, sachant que le capteur radar est capable d'évaluer la somme et la différence de deux faisceaux d'antenne voisins pour obtenir une résolution angulaire horizontale plus élevée.

**5.** Capteur radar selon l'une quelconque des revendications 1 à 4, sachant que les antennes émettrices sont conçues de façon identique.

**6.** Capteur radar selon l'une quelconque des revendications 1 à 5, sachant que les antennes réceptrices sont des lignes d'antennes, qui sont disposées parallèles les unes par rapport aux autres.

**7.** Capteur radar selon la revendication 6, sachant que les lignes d'antennes des antennes émettrices et des antennes réceptrices sont disposées parallèles les unes par rapport aux autres.

**8.** Capteur radar selon la revendication 1, sachant que la position de l'objet peut être représentée par évaluation de montant et de phase au moyen d'un dispositif de restitution par le biais de plusieurs diagrammes d'antenne.

**9.** Système radar destiné à l'utilisation d'un capteur radar pour la détermination d'une position d'un objet dans un espace tridimensionnel selon l'une quelconque des revendications 1 à 8.

**10.** Procédé de mesure radar permettant de déterminer une position d'un objet, en particulier d'un objet en mouvement, avec les étapes de procédé suivantes :

- réception d'une suite de signaux de réception se succédant dans le temps, émis par au moins deux antennes émettrices constituées pouvant être montées en lignes d'antennes et réfléchis sur l'objet par un nombre de plusieurs antennes réceptrices disposées horizontalement en une série,

sachant que les lignes d'antennes des antennes émettrices sont disposées verticales et parallèles les unes par rapport aux autres et au moins les deux antennes émettrices possèdent respectivement des centres de phase avec une position verticale différente l'un par rapport à l'autre,
sachant que les antennes émettrices sont disposées à l'horizontale à une distance, laquelle correspond à la distance horizontale entre deux antennes individuelles voisines des antennes réceptrices et sachant que les centres de phase respectifs des antennes émettrices sont décalées les uns par rapport aux autres à la verticale d'une distance, qui est plus petite ou égale à la moitié de la longueur d'onde en espace libre du signal émis,

- numérisation des signaux de réception,
- association des signaux de réception numérisés selon la méthode de la formation de faisceau numérique à plusieurs faisceaux d'antenne associés,
- exécution d'une correction de vitesse au moyen d'une transformée de Fourier rapide (FFT) et mesure du décalage temporel entre les deux émissions différentes,
- comparaison de phase des faisceaux d'antenne orientés sur l'objet pour une position verticale différente des centres de phases des antennes émettrices à une valeur d'éloignement et de vitesse identique, et
- représentation de la position de l'objet.

**11.** Procédé selon la revendication 10, sachant que les amplitudes des faisceaux d'antenne voisins sont évaluées pour obtenir une résolution angulaire horizontale plus élevée, dans une plage d'angles d'observation.

**12.** Procédé selon la revendication 10, sachant que la somme et la différence de deux faisceaux d'antenne voisins sont évaluées pour obtenir une résolution angulaire horizontale plus élevée.

Abbildung 1: Physikalische Anordnung von Sendern und Empfängern

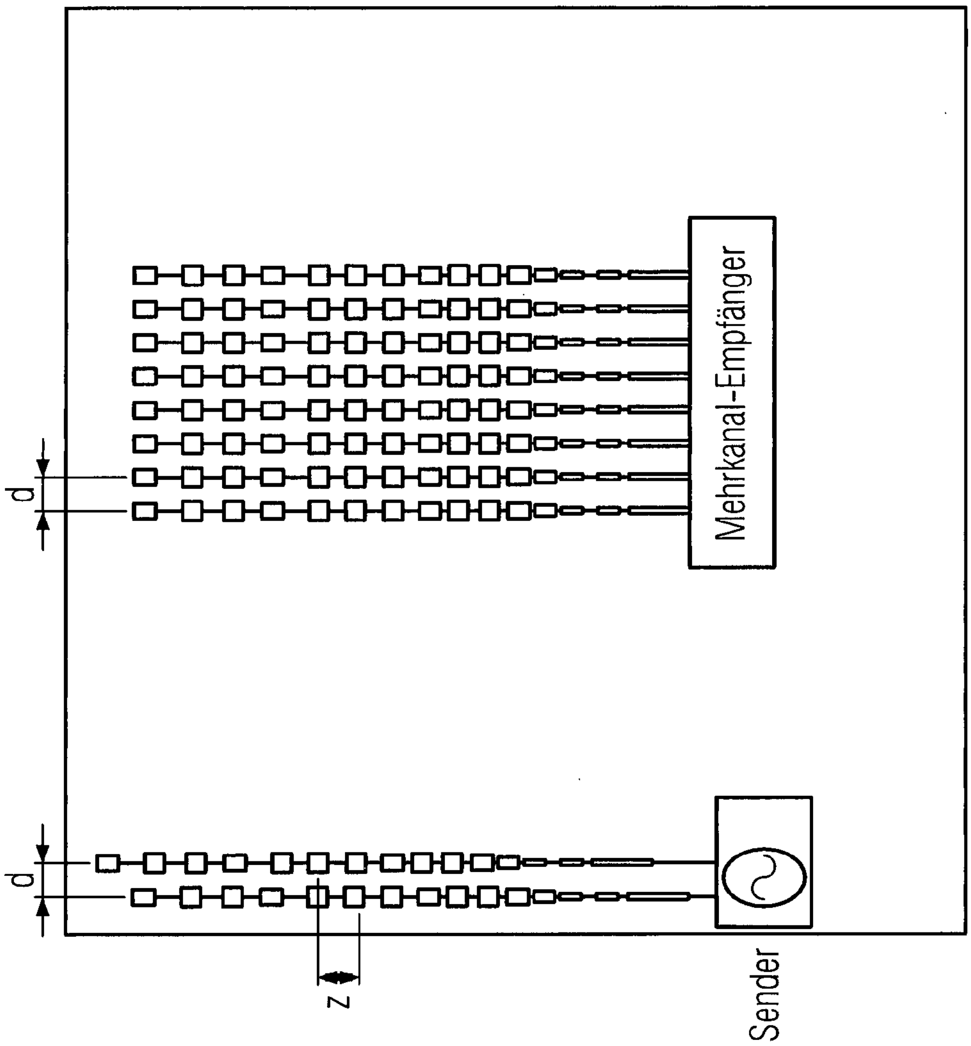

Abbildung 2: Zeitdiagramm und Modulationsform

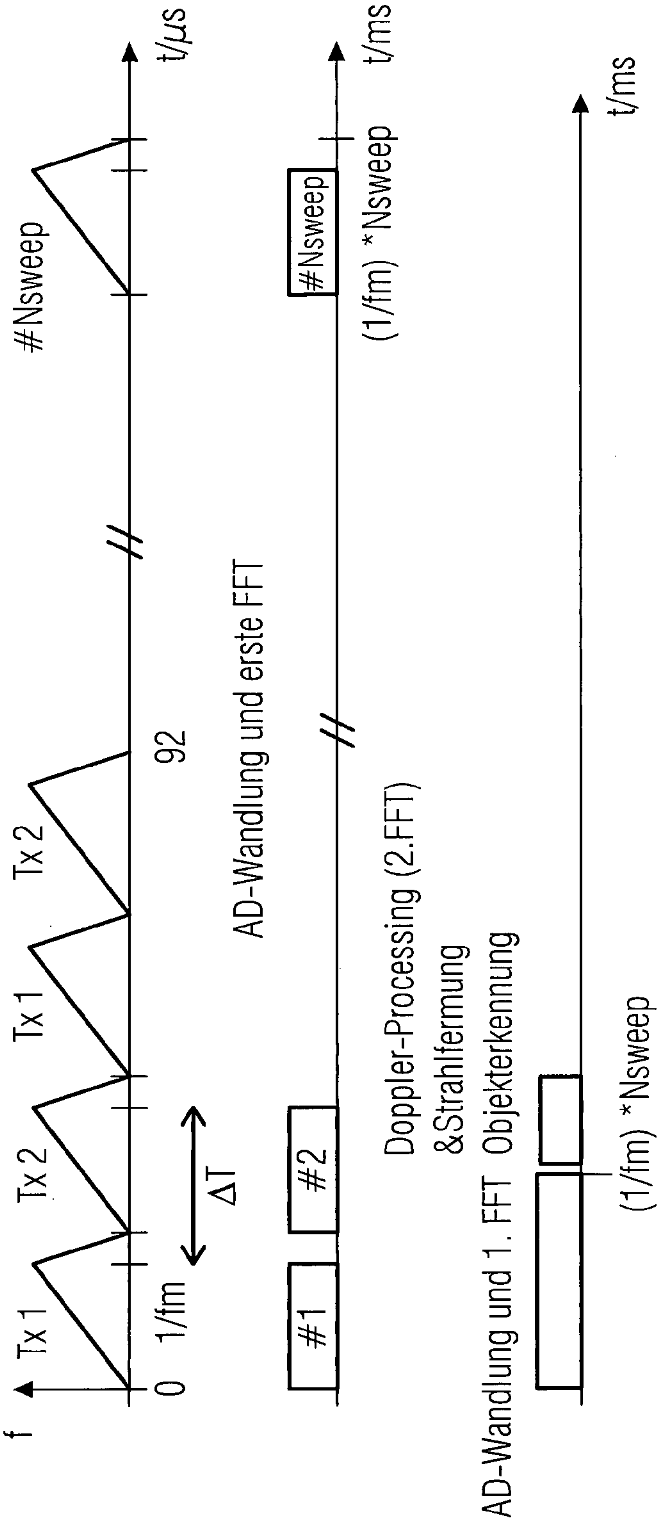

Abbildung 3a: Antennendiagramm zweier benachbarter Antennenstrahlen

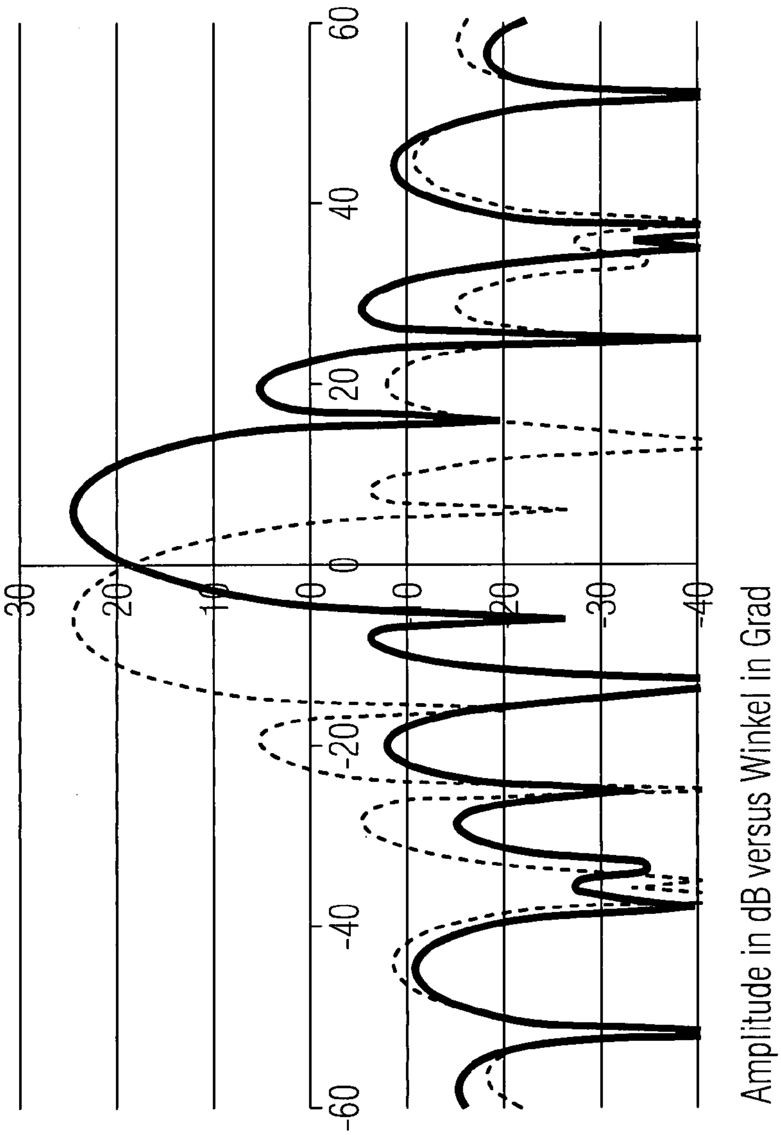

Abbildung 3b: Amplitudenverhältnis der benachbarten Antennenstrahlen aus Abbildung 3a

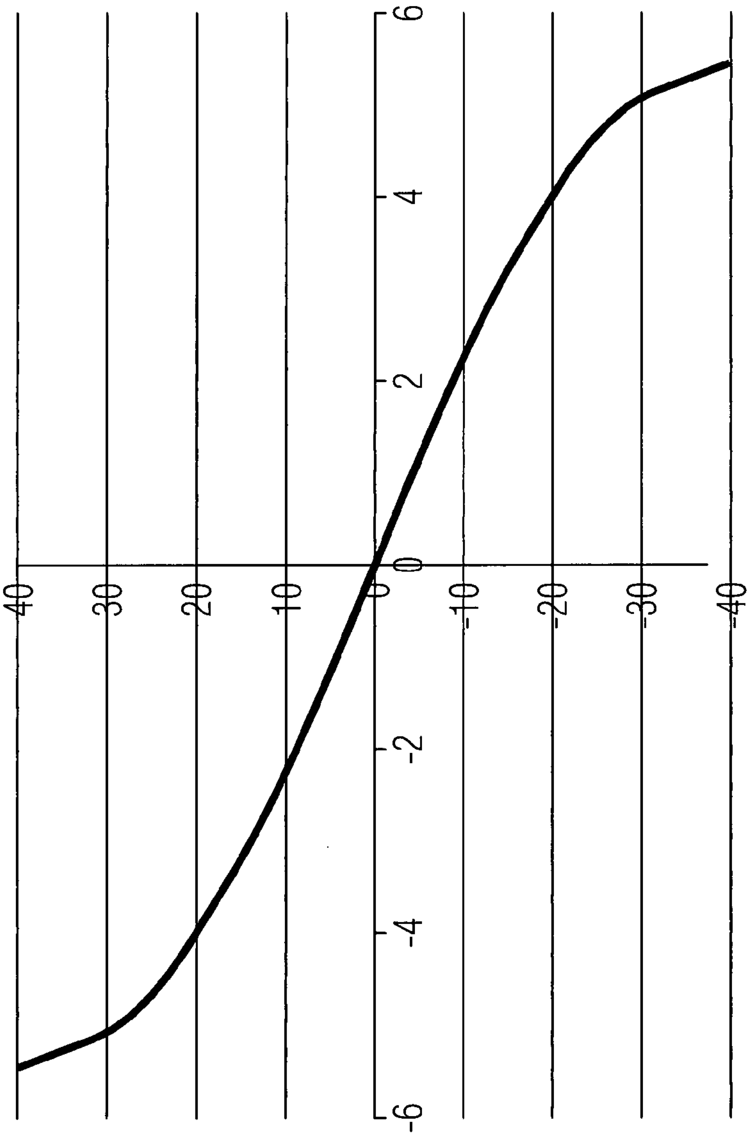


Amplitudenverhältnis in dB versus Winkel in Grad

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102008052246 A1
- WO 2013034282 A1
- US 6246365 B1
- WO 2010066458 A1
- US 2011163906 A1


### In der Beschreibung aufgeführte Nicht-Patentliteratur


- **DR. WINFRIED MAYER.** Abbildender Radarsensor mit sendeseitig geschalteter Gruppenantenne. Cuvillier Verlag, 2008